# EUROPEAN PATENT SPECIFICATION

(11) **EP 3 401 895 B1**
(45) Date of publication and mention of the grant of the patent: **21.06.2023**
(21) Application number: 17170348.1
(22) Date of filing: 10.05.2017
(51) Int. Cl.: G09F 21/08, G09F 19/18, G03B 17/54, H04N 5/225, G03B 15/00, G03B 21/28, G03B 21/56, G09F 27/00, H04N 5/262

(54) **LIVE BROADCASTING SYSTEM**
LIVE-RUNDFUNKSYSTEM
SYSTÈME DE DIFFUSION EN DIRECT

(43) Date of publication of application: 14.11.2018
(73) Proprietor: Vestel Elektronik Sanayi ve Ticaret A.S., 45030 Manisa (TR); Ozyegin Universitesi, 34794 Istanbul (TR)
(72) Inventor: GULBAHAR, Burhan, 34794 Çekmeköy/Istanbul (TR); MEMISOGLU, Gorkem, 45030 Manisa (TR)
(74) Representative: Kehl, Ascherl, Liebhoff & Ettmayr Patentanwälte Partnerschaft mbB

(56) References cited:
- EP-A1- 3 401 895
- WO-A2-01/65861
- US-A1- 2001 040 671
- US-A1- 2007 149 281
- US-A1- 2009 079 942
- US-A1- 2010 182 409
- GROBE LIANE ET AL: "High-speed visible light communication systems", IEEE COMMUNICATIONS MAGAZINE, IEEE SERVICE CENTER, PISCATAWAY, US, vol. 51, no. 12, 1 December 2013 (2013-12-01), pages 60-66, XP011534246, ISSN: 0163-6804, DOI: 10.1109/MCOM.2013.6685758 [retrieved on 2013-12-16]
- Cooa.Co.Uk: "AstroVideo", The Wayback Machine, 17 January 2016 (2016-01-17), XP055927876, Retrieved from the Internet: URL:https://web.archive.org/web/2016011720 1629/https://www.coaa.co.uk/astrovideo.htm [retrieved on 2022-06-03]

## Description

### TECHNICAL FIELD

The invention relates to a live broadcasting system.

### BACKGROUND

Although applicable to any video streaming system the present invention will mainly be described regarding live video broadcasting of live events.

Live video streams are produced and distributed for a plurality of events nowadays. Usually the live video stream will be recorded with cameras, especially digital cameras, and the digital video stream will then be distributed e.g. via the internet or TV broadcast signals to the receivers, e.g. homes or businesses like bars.

Such live streaming of video image requires high bandwidth wired or wireless communication systems and is not feasible in a low cost manner considering hundreds of thousands of home networks and the current consumption while the broadcast stream reaches at homes. Further, live streaming of such videos is only possible with satellite systems or wireless communication infrastructures that are costly to set-up and maintain. Live streaming via digital data networks is only possible with huge latencies due to the high bandwidth requirement and the conversion of optical images to electronic data in the camera and its transmission delay through wired/wireless data networks. Finally, recording and conversion of the live event with high quality cameras is necessary with such broadcasting systems.

Document US 2001 / 0 040 671 A1 provides a large-audience imaging and display system that uses cameras and projectors to project a recorded scene onto an outer shell of a hovering screen. Document WO 01 / 65 861 A1 discloses a system for recording multiple perspective images using mirrors. Document US 2007 / 0 149 281 A1 discloses techniques for displaying content on a movable display, where movement of the movable display is determined and where the content to be displayed is coordinated with the movement of the movable display. Document US 2009 / 0 079 942 A1 discloses an automatic display apparatus with a hovering flight object that carries a screen, and with an adjusting unit for adjusting the image projecting direction of the projector.

Accordingly, there is a need for a simplified live video broadcasting system.

### SUMMARY OF THE INVENTION

The present invention provides a live broadcasting system with the features of claim 1.

The present invention provides a live broadcasting system for broadcasting images/videos from an area of interest, wherein live video stream broadcast can be achieved with low-latency and low-delay, and simple equipment for hundreds of thousands of home receivers may be used at the same time without consuming valuable RF bands or utilizing the Internet.

The first mirrors that are positioned at (also including around or near) the area of interest may be positioned such that required or requested perspectives of the area of interest are mirrored to the floating vessels, usually up in the sky. It is understood, that any mechanical positioning devices may be provided for the first mirrors, such that the first mirrors e.g. reflect a side view of the area of interest.

The area of interest may e.g. be a sports field or ground and the mirrors may e.g. be placed in a tilted fashion around the sports field or ground. Therefore, the side view of the sports field or ground will be mirrored by the first mirrors up into the sky.

The optical arrangements in the floating vessels will then pick up that reflected side views and project them onto screens on a shell of the respective floating vessel. The shells of the floating vessels may comprise specific translucent screen sections. As an alternative the shells as a whole may be translucent and serve as screens. Therefore, if e.g. a floating vessel rotates the screens may be kept at a permanent position relative e.g. to the area of interest instead of rotating with the floating vessel.

These projected images may then be easily picked up by viewers either with their eyes or with optical and/or electronic receiving equipment.

The mirrors are positioned and/or arranged such that two neighboring mirrors in each case provide the left and right image for a three-dimensional video stream.

Since the mirrors reflect the image from different angles, a device in the balloon may combine multiple images to create 3D views or the images may be separately projected onto the shell of the floating vessel. With the invention 3D information may be included in a set of analog images captured at different viewing angles by the first mirrors. The images displayed on the shell may also comprise the views of the event from different viewing angles.

Combining these different views for producing analog or digital 3D multimedia information can be achieved at the receiver, on the floating vessel or anywhere else. Optionally a combination device may combine the images to form the 3D video. Alternatively, multiple views of the event can be watched at the same time on the floating vessel as a very large display.

Further embodiments of the present invention are subject of the further subclaims and of the following description, referring to the drawings.

In an embodiment, the floating vessels may comprise balloons and/or airships and/or glider drones.

Different floating of slow flying vessels may be used as system carriers to carry the optical and electrical system that is needed in the air to provide the live broadcast system with the present invention.

The optical arrangements in the floating vessels comprise controllable telescopes configured to pick up images of the area of interest and the first mirrors.

With the help of telescopes large distances can be bridged. The floating vessels may e.g. be some hundreds of meters to tens of kilometers away from the area of interest. The controllable telescopes may e.g. be controllable regarding the direction they point to, the focus and the like.

The second mirrors, lenses and prisms provide an analogue projection of the area of interest and/or the images reflected by the mirrors on the outer shell of the respective floating vessel. Such analog images may be viewed by everyone without requiring complex receiving equipment.

The second mirrors, lenses and prisms may e.g. be configured to project specific sections, like images of the first mirrors onto the screens on the outer shell of the respective floating vessel, instead of the full image received by the telescopes.

The optical arrangements in the floating vessels comprise a digital camera, wherein the digital camera is configured to record a video of the images captured by the controllable telescope of the respective floating vessel, and a projector that may be configured to project the recorded video onto the shell of the floating vessel.

The camera digitizes the image data and allows to further process this image data. At the same time the projector acts like a kind of optical amplifier since the projector will comprise a light source and the brightness of the image projected by the projector may therefore be higher than the brightness of the image projected by the optical arrangements.

The live broadcasting system comprises a ground synchronization device on the ground and an air synchronization device in each one of the floating vessels, wherein the ground synchronization device is configured to determine synchronization information comprising at least position information of the floating vessels and to provide this synchronization information to the air synchronization devices.

The positions of the floating vessels may change due to the nature of the vessels. For example balloons and zeppelins may move with the wind and glider drones must constantly move to generate upwards drag on the wings.

The position information is therefore be provided to the air synchronization devices from the ground synchronization devices in order to adjust e.g. the positions of the floating vessels and/or control the optical arrangements in the floating vessels.

It is understood that the ground synchronization device may also know the positions and/or orientations of the first mirrors and/or the area of interest. The ground synchronization device may e.g. determine the position information as absolute or relative position information regarding the positions and/or orientations of the first mirrors and the area of interest.

The ground synchronization device may e.g. track the positions and/or orientations of the floating vessels using image recognition techniques or the like.

In another embodiment, the air synchronization devices may be configured to control the controllable telescopes and/or digital cameras based on the position information of the respective floating vessel.

The controllable telescopes may e.g. be adjusted regarding the image section that is picked up and projected onto the screens on the outer shell of the floating vessels or recorded by the digital camera. Movements of the floating vessels may therefore easily be compensated.

The optical arrangements in the floating vessels comprise an image enhancement unit configured to perform image enhancement of the video recorded by the digital camera based on the synchronization information, wherein the synchronization information comprises supplementary image data for the image enhancement unit.

For example, there might be a shadow on the live event area and some details may not be seen by the camera in the floating vessel. The synchronization information comprises image details to enhance the image taken by the digital camera. Such image details are provided by a ground camera that films the area of interest. Alternatively, the synchronization information may comprise information regarding the colors, brightness or the like of the images projected onto the shell of the floating vessel that may be electronically corrected e.g. by the image enhancement unit.

In an embodiment, the ground synchronization device may comprise at least one synchronization camera configured to record images projected onto the shell of at least one of the floating vessels and a correction unit configured to provide the synchronization information based on the recorded images, especially to calculate error correction information for the video stream.

The images recorded by the synchronization camera may be analyzed to determine parameters of the images projected onto the shell of the vessel. Image error correction frames may then be sent in the synchronization information based on the images recorded by the synchronization camera. Correction algorithms that may be applied are e.g. disclosed in "Adaptable forward error correction for multimedia streams" by Bernd Lamparter.

In a further embodiment, the ground synchronization device may comprise a light source configured to perform visible light communication and the air synchronization device may comprise a visible light communication receiver, wherein the ground synchronization device may provide the synchronization information via the visible light communication.

The light source for performing visible light communication may e.g. comprise a LED panel of an adequate size. The size of the LED panel may e.g. be adapted to the distance between the LED panel and the respective one of the floating vessels.

The visible light communication receiver may e.g. comprise a camera that is focused on the light source or the like.

The light source may also be arranged inside of the area that is recorded with the digital camera in the respective floating vessel and the section of the camera image that represents the light source may be evaluated by a controller or the image enhancement unit.

The live broadcasting system comprises a number of remote receivers, the remote receivers comprise an optical reception arrangement configured to pick up the reflected images from the outer shell of at least one of the floating vessels.

The remote receivers may e.g. comprise lenses or telescopes that pick up the images that are projected onto the shell of one of the floating vessels. The lenses or telescopes may be used by users to directly view the live event.

In another embodiment, at least one of the remote receivers comprises an image sensor that digitally senses the images picked up by the respective optical reception arrangement.

The image sensor may e.g. be a CMOS camera sensor that digitally outputs the images picked up by the optical reception arrangement. The images may then e.g. be displayed on a display device at the user's premises. Such a display device may e.g. be a TV, a smartphone, a laptop or any other type of screen.

In an embodiment, at least one of the remote receivers comprises a data processing unit that is configured to process image data provided by the image sensor prior to displaying of the image data.

Processing the image data in this context may refer to performing image enhancements, like e.g. brightness and color adjustments. Such adjustments may e.g. be performed based on known reference mark on the screens, like e.g. a frame around the image with a known color, e.g. black.

Processing the image data in this context also refers to performing geometrical image transformations like correcting distortions or deformations of the images or cropping images to e.g. remove sections of the image data that are not part of the images. Cropping also refers to separating or cutting out two different images for a left-eye and a right-eye image of a 3D video sequence.

In a further embodiment, the data processing unit may be configured to control the optical reception arrangement based on an analysis of the image data provided by the image sensor.

The optical reception arrangement may e.g. comprise electrically controllable actuators. Controlling may therefore refer to controlling the zoom, focusing the optical reception arrangement or moving the optical reception arrangement to e.g. follow the floating vessel.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a live broadcasting system according to the present invention;
Fig. 2 shows a block diagram of another embodiment of a live broadcasting system according to the present invention; and
Fig. 3 shows a block diagram of another embodiment of a live broadcasting system according to the present invention.

In the figures like reference signs denote like elements unless stated otherwise.

### DETAILED DESCRIPTION OF THE DRAWINGS

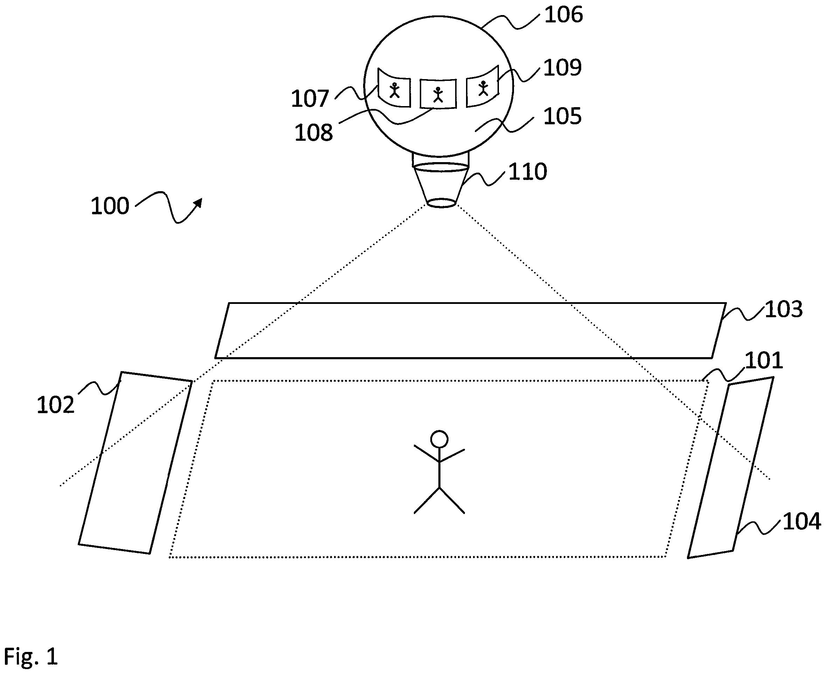

Fig. 1 shows a block diagram of a live broadcasting system 100. The live broadcasting system 100 comprises a floating vessel 105 that is hovering or floating over an area of interest 101. In the live broadcasting system 100 three first mirrors 102, 103, 104 are positioned around the area of interest 101. It is understood that the first mirrors 102, 103, 104 may also be positioned inside of the area of interest 101. In any case, the floating vessel 105 comprises an optical arrangement 110 that is focused onto the area of interest 101 and the first mirrors 102, 103, 104.

In Fig. 1 the floating vessel 105 is shown as a balloon that hovers or floats over the area of interest 101. It is however understood that any other type of floating vessel, like e.g. zeppelins or glider drones or the like may be used.

The optical arrangement 110 of the floating vessel 105 picks up an image of the area of interest 101 and the first mirrors 102, 103, 104. The optical arrangement 110 will then project at least the reflected images as reflected by the first mirrors 102, 103, 104 onto the outer shell 106 of the respective floating vessel 105. The outer shell 106 may e.g. comprise screens 107, 108, 109 or screen sections of the shell that are used as projection surfaces. The screens 107, 108, 109 may be dedicated translucent screens 107, 108, 109. As an alternative the whole surface of the floating vessel 105 may be a screen and the screens 107, 108, 109 are mere virtual screens formed by projecting images onto the respective section of the outer shell 106.

The optical arrangement 110 may e.g. comprise one or more controllable telescopes for picking up the images of the area of interest 101 and/or the first mirrors 102, 103, 104.

The optical arrangement 110 in the floating vessel 105 may also comprise a digital camera that records a video of the images captured by the telescope of the floating vessel 105. Further, a projector may project the recorded video onto the shell 106 of the floating vessel 105.

With the arrangement of the live broadcasting system 100 images of the area of interest 101 may be projected onto the screens 107, 108, 109. With the help of the first mirrors 102, 103, 104 the images are not limited to top views but may instead comprise side views as are usually used e.g. to broadcast concerts or sports events.

The images projected onto the screens 107, 108, 109 may be huge depending on the size of the floating vessel 105. Therefore, such images may e.g. be directly viewed by users without any additional equipment.

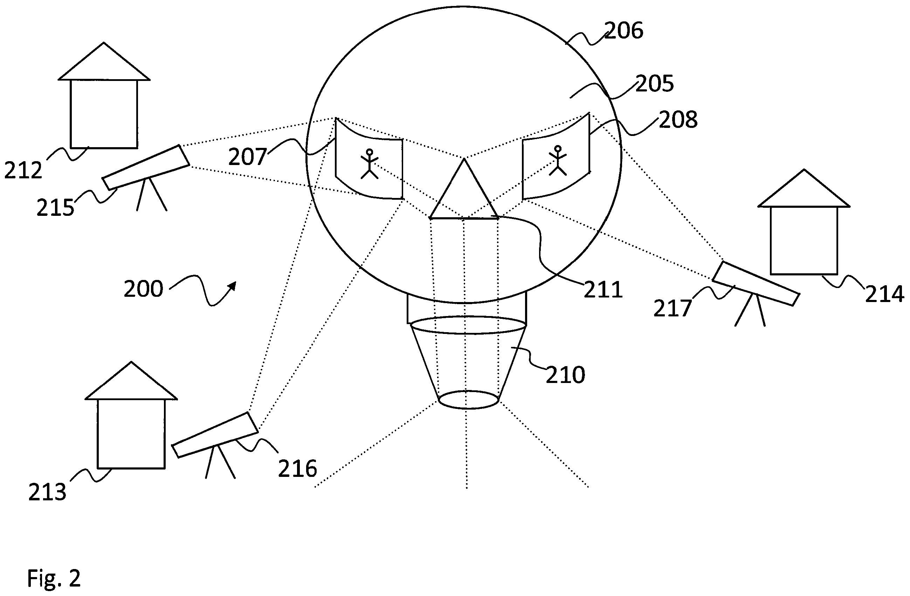

Fig. 2 shows a block diagram of another live broadcasting system 200. The live broadcasting system 200 is based on the live broadcasting system 100. In Fig. 2 the area of interest 101 and the first mirrors 102, 103, 104 are omitted. The live broadcasting system 200 also comprises a floating vessel 205 with an outer shell 206.

In the floating vessel 205 the optical arrangement comprises a telescope 210 and a prism 211. It is understood, that the prism is just exemplarily and may represent any type and number of optical elements necessary to achieve the desired function.

The telescope 210 and the prism 211 are used to pick-up, split and focus/project images from the area of interest onto the screens 207, 208.

Surrounding the floating vessel 205 the live broadcasting system 200 comprises a plurality of user premises or houses 212, 213, 214. It is understood, that the houses 212, 213, 214 are just exemplarily shown and that any number and type of user premises is possible. At the houses 212, 213, 214 remote receivers, shown as telescopes 215, 216, 217, are provided. The remote receivers may comprise any type of optical and/or electronic arrangement. For example, the telescopes 215, 216, 217 may allow users to directly view the images on the screens 207, 208.

However, the remote receivers, e.g. the telescopes 215, 216, 217, may also comprise e.g. image sensors that digitally senses the images picked up by the telescopes 215, 216, 217. Further, data processing units may be provided that process image data provided by the image sensor prior to displaying of the image data. The data processing units may e.g. also control the optical reception arrangement, e.g. the telescopes 215, 216, 217, based on an analysis of the image data provided by the image sensor.

The image data may then be displayed to the users in their houses 212, 213, 214 e.g. on TVs or the like.

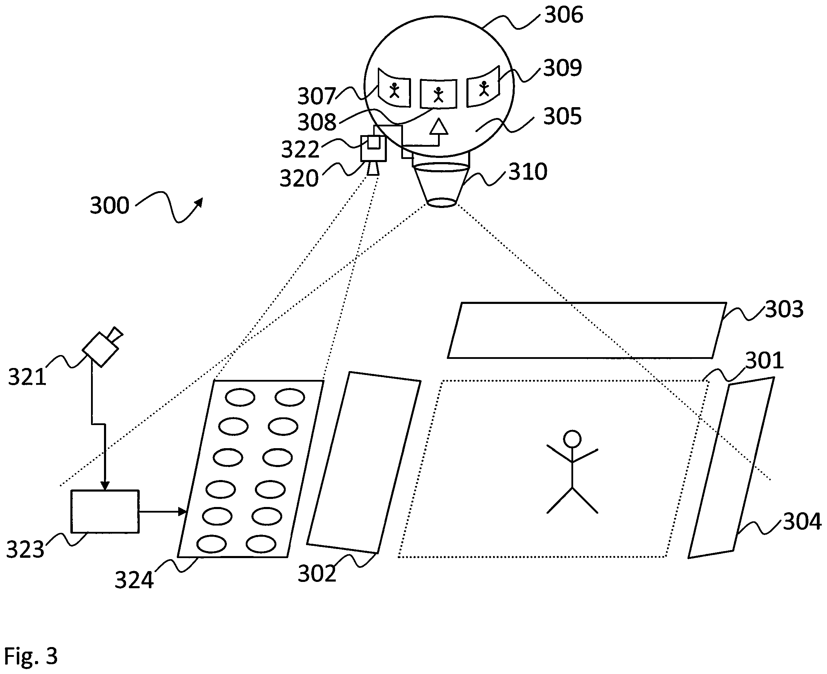

Fig. 3 shows a block diagram of another live broadcasting system 300. The live broadcasting system 300 is based on the live broadcasting system 100 and therefore also comprises a floating vessel 305 that picks up images of an area of interest 301. In the area of interest 301 any type of optical arrangement 310 as described above may be used to pick-up and project the images onto the screens 307, 308, 309.

The live broadcasting system 300 in addition comprises a ground synchronization device (not separately referenced) on the ground and an air synchronization device in the floating vessel 305.

The ground synchronization device may e.g. be configured to determine synchronization information comprising at least position information of the floating vessel 305 and to provide this synchronization information to the air synchronization devices.

The ground synchronization device comprises a synchronization camera 321 that records the images projected onto the shell 306 of the floating vessel 305. Further the ground synchronization unit comprises a correction unit 323 that provides synchronization information based on the recorded images, for example to calculate error correction information for the video stream. For transmission of the synchronization information the ground synchronization device may comprise a light source 324 configured to perform visible light communication. The air synchronization device comprises a visible light communication receiver 320, and the ground synchronization device provides the synchronization information via the visible light communication.

The optical arrangement 310 comprises an image enhancement unit 322 that performs image enhancement of a video recorded by a digital camera of the optical arrangement 310 based on the synchronization information. The synchronization information may e.g. comprise supplementary image data for the image enhancement unit 322. The air synchronization device, e.g. the image enhancement unit 322, may control controllable telescopes prisms and/or digital cameras of the optical arrangement 310 accordingly.

Although in Figs. 1 - 3 it is schematically shown that the same image is projected onto all screens 107, 108, 109, 207, 208, 307, 308, 309, it is understood that the optical arrangements 110, 210, 211, 310 may be adapted to project different images, e.g. with different perspectives or pertaining to two views of a 3D view onto the screens 107, 108, 109, 207, 208, 307, 308, 309.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

The present invention provides a live broadcasting system 100, 200, 300 for broadcasting images from an area of interest 101, 301, the live broadcasting system 100, 200, 300 comprising a number of first mirrors 102, 103, 104, 302, 303, 304 positioned at the area of interest 101, 301, and a number of floating vessels 105, 205, 305 which are positioned in a line of sight of the mirrors, wherein the mirrors are configured to reflect an image of at least a section of the area of interest 101, 301 to the floating vessels 105, 205, 305, and wherein the floating vessels 105, 205, 305 each comprise an optical arrangement 110, 210, 211, 310 configured to project the reflected images onto an outer shell 106, 206, 306 of the respective floating vessel 105, 205, 305.

### List of reference signs

- 100, 200, 300: live broadcasting system
- 101, 301: area of interest
- 102, 103, 104, 302, 303, 304: first mirrors
- 105, 205, 305: floating vessels
- 106, 206, 306: outer shell
- 107, 108, 109, 207, 208, 307, 308, 309: screen
- 110, 210, 211, 310: optical arrangement
- 212,213,214: house
- 215, 216, 217: remote receiver

- 320: visible light communication receiver
- 321: synchronization camera
- 322: image enhancement unit
- 323: correction unit
- 324: light source

## Claims

1. Live broadcasting system (100, 200, 300) for broadcasting images from an area of interest (101, 301), the live broadcasting system (100, 200, 300) comprising:
a number of first mirrors (102, 103, 104, 302, 303, 304) positioned at the area of interest (101, 301) such that two neighboring mirrors in each case provide the left and right image for a three-dimensional video stream,
a number of floating vessels (105, 205, 305) which are positioned in a line of sight of the mirrors,
wherein the mirrors are configured to reflect an image of at least a section of the area of interest (101, 301) to the floating vessels (105, 205, 305), and wherein the floating vessels (105, 205, 305) each comprise an optical arrangement (110, 210, 211, 310) configured to project the reflected images onto an outer shell (106, 206, 306) of the respective floating vessel (105, 205, 305), and comprising
a number of remote receivers (215, 216, 217), the remote receivers (215, 216, 217) comprising an optical reception arrangement configured to pick up the reflected images from the outer shell (106, 206, 306) of at least one of the floating vessels (105, 205, 305), an image sensor that digitally senses the images picked up by the respective optical reception arrangement, and wherein at least one of the remote receivers (215, 216, 217) comprises a data processing unit that is configured to process image data provided by the image sensor prior to displaying of the image data by separating or cutting out two different images for a left-eye and a right-eye image of a three-dimensional video sequence and to perform geometrical image transformations for correcting distortions or deformations of the images;
wherein the optical arrangements (110, 210, 211, 310) in the floating vessels (105, 205, 305) comprise controllable telescopes configured to pick up images of the area of interest (101, 301) and the first mirrors (102, 103, 104, 302, 303, 304), and
wherein the optical arrangements (110, 210, 211, 310) in the floating vessels (105, 205, 305) comprise a digital camera, wherein the digital camera is configured to record a video of the images captured by the controllable telescope of the respective floating vessel (105, 205, 305), and a projector configured to project the recorded video onto the shell (106, 206, 306) of the floating vessel (105, 205, 305); and
comprising a ground camera configured to film the area of interest, and a ground synchronization device on the ground and an air synchronization device in each one of the floating vessels (105, 205, 305), wherein the ground synchronization device is configured to determine synchronization information comprising at least position information of the floating vessels (105, 205, 305) and image details to enhance the image taken by the digital camera, the image details being provided by the ground camera filming the area of interest, and to provide this synchronization information to the air synchronization devices;
wherein the optical arrangements (110, 210, 211, 310) in the floating vessels (105, 205, 305) comprise an image enhancement unit (322) configured to perform image enhancement of the video recorded by the digital camera based on the synchronization information, wherein the synchronization information comprises supplementary image data for the image enhancement unit (322).

2. Live broadcasting system (100, 200, 300) according to claim 1, wherein the floating vessels (105, 205, 305) comprise balloons and/or airships and/or glider drones.

3. Live broadcasting system (100, 200, 300) according to claim 1, wherein the air synchronization devices are configured to control the controllable telescopes and/or digital cameras based on the position information of the respective floating vessel (105, 205, 305).

4. Live broadcasting system (100, 200, 300) according to claim 1, wherein the ground synchronization device comprises at least one synchronization camera (321) configured to record images projected onto the shell (106, 206, 306) of at least one of the floating vessels (105, 205, 305) and a correction unit (323) configured to provide the synchronization information based on the recorded images, especially to calculate error correction information for the video stream.

5. Live broadcasting system (100, 200, 300) according to claim 1, wherein the ground synchronization device comprises a light source (324) configured to perform visible light communication and the air synchronization device comprises a visible light communication receiver (320), and wherein the ground synchronization device provides the synchronization information via the visible light communication.

6. Live broadcasting system (100, 200, 300) according to claim 5, wherein the data processing unit is configured to control the optical reception arrangement based on an analysis of the image data provided by the image sensor.

## Patentansprüche

1. Live-Übertragungssystem (100, 200, 300) zum Übertragen von Bildern aus einem interessierenden Bereich (101, 301), wobei das Live-Übertragungssystem (100, 200, 300) umfasst:
eine Anzahl von ersten Spiegeln (102, 103, 104, 302, 303, 304), die in dem interessierenden Bereich (101, 301) so positioniert sind, dass jeweils zwei benachbarte Spiegel das linke und rechte Bild für einen dreidimensionalen Videostrom liefern,
eine Anzahl von schwebenden Fahrzeugen (105, 205, 305), die in einer Sichtlinie zu den Spiegeln positioniert sind,
wobei die Spiegel so konfiguriert sind, dass sie ein Bild von mindestens einem Abschnitt des interessierenden Bereichs (101, 301) zu den schwebenden Fahrzeugen (105, 205, 305) reflektieren, und wobei die schwebenden Fahrzeuge (105, 205, 305) jeweils eine optische Anordnung (110, 210, 211, 310) aufweisen, die so konfiguriert ist, dass sie die reflektierten Bilder auf eine Außenhülle (106, 206, 306) des jeweiligen schwebenden Fahrzeugs (105, 205, 305) projiziert, und umfassend
eine Anzahl von entfernten Empfängern (215, 216, 217), wobei die entfernten Empfänger (215, 216, 217) eine optische Empfangsanordnung aufweisen, die konfiguriert ist, um die reflektierten Bilder von der Außenhülle (106, 206, 306) von mindestens einem der schwebenden Fahrzeuge (105, 205, 305) aufzunehmen, einen Bildsensor, der die von der jeweiligen optischen Empfangsanordnung aufgenommenen Bilder digital erfasst, und wobei mindestens einer der entfernten Empfänger (215, 216, 217) eine Verarbeitungseinheit aufweist, die dazu konfiguriert ist, vom Bildsensor gelieferte Bilddaten vor der Darstellung der Bilddaten zu verarbeiten, indem sie zwei unterschiedliche Bilder für ein linkes und ein rechtes Bild einer dreidimensionalen Videosequenz trennt oder ausschneidet und geometrische Bildtransformationen zur Korrektur von Verzerrungen oder Verformungen der Bilder durchführt;
wobei die optischen Anordnungen (110, 210, 211, 310) in den schwebenden Fahrzeugen (105, 205, 305) steuerbare Teleskope aufweisen, die konfiguriert sind, um Bilder des interessierenden Bereichs (101, 301) und der ersten Spiegel (102, 103, 104, 302, 303, 304) aufzunehmen, und
wobei die optischen Anordnungen (110, 210, 211, 310) in den schwebenden Fahrzeugen (105, 205, 305) eine Digitalkamera aufweisen, wobei die Digitalkamera konfiguriert ist, um ein Video der Bilder aufzuzeichnen, die durch das steuerbare Teleskop des jeweiligen schwebenden Fahrzeugs (105, 205, 305) aufgenommen wurden, und einen Projektor, der konfiguriert ist, um das aufgezeichnete Video auf die Hülle (106, 206, 306) des schwebenden Fahrzeugs (105, 205, 305) zu projizieren; und
eine Bodenkamera, die so konfiguriert ist, dass sie den interessierenden Bereich filmt, und eine Bodensynchronisationsvorrichtung am Boden und eine Luftsynchronisationsvorrichtung in jedem der schwebenden Fahrzeuge (105, 205, 305), wobei die Bodensynchronisationsvorrichtung so konfiguriert ist, dass sie Synchronisationsinformationen bestimmt, die zumindest Positionsinformationen der schwebenden Fahrzeuge (105, 205, 305) und Bilddetails aufweisen, um das von der Digitalkamera aufgenommene Bild zu verbessern, wobei die Bilddetails von der Bodenkamera, die den interessierenden Bereich filmt, geliefert werden, und um diese Synchronisationsinformationen den Luftsynchronisationsvorrichtungen bereitzustellen;
wobei die optischen Anordnungen (110, 210, 211, 310) in den schwebenden Fahrzeugen (105, 205, 305) eine Bildverbesserungseinheit (322) aufweisen, die so konfiguriert ist, dass sie eine Bildverbesserung des von der Digitalkamera aufgenommenen Videos auf der Basis der Synchronisationsinformationen durchführt, wobei die Synchronisationsinformationen zusätzliche Bilddaten für die Bildverbesserungseinheit (322) aufweisen.

2. Live-Übertragungssystem (100, 200, 300) gemäß Anspruch 1, wobei die schwebenden Fahrzeuge (105, 205, 305) Ballons und/oder Luftschiffe und/oder Segelflugdrohnen aufweisen.

3. Live-Übertragungssystem (100, 200, 300) gemäß Anspruch 1, wobei die LuftSynchronisationsvorrichtungen so konfiguriert sind, dass sie die steuerbaren Teleskope und/oder Digitalkameras basierend auf der Positionsinformation des jeweiligen schwebenden Fahrzeugs (105, 205, 305) steuern.

4. Live-Übertragungssystem (100, 200, 300) gemäß Anspruch 1, wobei die Bodensynchronisationsvorrichtung mindestens eine Synchronisationskamera (321) aufweist, die so konfiguriert ist, dass sie Bilder aufnimmt, die auf die Hülle (106, 206, 306) mindestens eines der schwebenden Fahrzeuge (105, 205, 305) projiziert werden, und eine Korrektureinheit (323), die so konfiguriert ist, dass sie die Synchronisationsinformationen auf der Grundlage der aufgenommenen Bilder liefert, insbesondere um Fehlerkorrekturinformationen für den Videostrom zu berechnen.

5. Live-Übertragungssystem (100, 200, 300) gemäß Anspruch 1, wobei die Vorrichtung zur Bodensynchronisation eine Lichtquelle (324) aufweist, die so konfiguriert ist, dass sie eine Kommunikation mit sichtbarem Licht durchführt, und die Vorrichtung zur Luftsynchronisation einen Kommunikationsempfänger (320) für sichtbares Licht aufweist, und wobei die Vorrichtung zur Bodensynchronisation die Synchronisationsinformationen über die Kommunikation mit sichtbarem Licht liefert.

6. Live-Übertragungssystem (100, 200, 300) gemäß Anspruch 5, wobei die Verarbeitungseinheit so konfiguriert ist, dass sie die optische Empfangsanordnung basierend auf einer Analyse der vom Bildsensor gelieferten Bilddaten steuert.

## Revendications

1. Système de diffusion en direct (100, 200, 300) pour la diffusion d'images d'une zone d'intérêt (101, 301), le système de diffusion en direct (100, 200, 300) comprenant :
un certain nombre de premiers miroirs (102, 103, 104, 302, 303, 304) positionnés sur la zone d'intérêt (101, 301) de manière à ce que deux miroirs voisins fournissent chacun l'image gauche et l'image droite pour un flux vidéo tridimensionnel,
un certain nombre de navires flottants (105, 205, 305) positionnés dans la ligne de mire des miroirs,
dans lequel les miroirs sont configurés pour réfléchir une image d'au moins une section de la zone d'intérêt (101, 301) vers les navires flottants (105, 205, 305), et dans lequel les navires flottants (105, 205, 305) comprennent chacun un arrangement optique (110, 210, 211, 310) configuré pour projeter les images réfléchies sur une coque extérieure (106, 206, 306) du navire flottant respectif (105, 205, 305), et comprenant
un certain nombre de récepteurs distants (215, 216, 217), les récepteurs distants (215, 216, 217) comprenant un dispositif de réception optique configuré pour capter les images réfléchies de la coque extérieure (106, 206, 306) d'au moins un des bateaux flottants (105, 205, 305), un capteur d'image qui capte numériquement les images captées par le dispositif de réception optique respectif, et dans lequel au moins l'un des récepteurs distants (215, 216, 217) comprend un système de traitement des données (voir la figure 1), 216, 217) comprend une unité de traitement des données configurée pour traiter les données d'image fournies par le capteur d'image avant l'affichage des données d'image en séparant ou en découpant deux images différentes pour une image de l'oeil gauche et une image de l'oeil droit d'une séquence vidéo tridimensionnelle et pour effectuer des transformations géométriques de l'image afin de corriger les distorsions ou les déformations des images ;
dans lequel les dispositifs optiques (110, 210, 211, 310) des navires flottants (105, 205, 305) comprennent des télescopes contrôlables configurés pour capter des images de la zone d'intérêt (101, 301) et des premiers miroirs (102, 103, 104, 302, 303, 304), et
dans lequel les arrangements optiques (110, 210, 211, 310) dans les bateaux flottants (105, 205, 305) comprennent une caméra numérique, dans laquelle la caméra numérique est configurée pour enregistrer une vidéo des images capturées par le télescope contrôlable du bateau flottant respectif (105, 205, 305), et un projecteur configuré pour projeter la vidéo enregistrée sur la coque (106, 206, 306) du bateau flottant (105, 205, 305) ; et
comprenant une caméra au sol configurée pour filmer la zone d'intérêt, et un dispositif de synchronisation au sol et un dispositif de synchronisation aérien dans chacun des bateaux flottants (105, 205, 305), dans lequel le dispositif de synchronisation au sol est configuré pour déterminer des informations de synchronisation comprenant au moins des informations de position des bateaux flottants (105, 205, 305) et des détails d'image pour améliorer l'image prise par l'appareil photo numérique, les détails d'image étant fournis par la caméra au sol filmant la zone d'intérêt, et pour fournir ces informations de synchronisation aux dispositifs de synchronisation aériens ;
dans lequel les dispositifs optiques (110, 210, 211, 310) dans les bateaux flottants (105, 205, 305) comprennent une unité d'amélioration d'image (322) configurée pour effectuer l'amélioration d'image de la vidéo enregistrée par la caméra numérique sur la base des informations de synchronisation, dans lequel les informations de synchronisation comprennent des données d'image supplémentaires pour l'unité d'amélioration d'image (322).

2. Système de diffusion en direct (100, 200, 300) selon la revendication 1, dans lequel les navires flottants (105, 205, 305) comprennent des ballons et/ou des dirigeables et/ou des drones planeurs.

3. Système de diffusion en direct (100, 200, 300) selon la revendication 1, dans lequel les dispositifs de synchronisation aérienne sont configurés pour commander les télescopes contrôlables et/ou les caméras numériques sur la base des informations de position du navire flottant respectif (105, 205, 305).

4. Système de diffusion en direct (100, 200, 300) selon la revendication 1, dans lequel le dispositif de synchronisation au sol comprend au moins une caméra de synchronisation (321) configurée pour enregistrer des images projetées sur la coque (106, 206, 306) d'au moins un des navires flottants (105, 205, 305) et une unité de correction (323) configurée pour fournir les informations de synchronisation sur la base des images enregistrées, notamment pour calculer les informations de correction d'erreur pour le flux vidéo.

5. Système de diffusion en direct (100, 200, 300) selon la revendication 1, dans lequel le dispositif de synchronisation au sol comprend une source lumineuse (324) configurée pour effectuer une communication par lumière visible et le dispositif de synchronisation aérien comprend un récepteur de communication par lumière visible (320), et dans lequel le dispositif de synchronisation au sol fournit les informations de synchronisation via la communication par lumière visible.

6. Système de diffusion en direct (100, 200, 300) selon la revendication 5, dans lequel l'unité de traitement de données est configurée pour commander le dispositif de réception optique sur la base d'une analyse des données d'image fournies par le capteur d'image.
